# EUROPEAN PATENT APPLICATION

(11) **EP 4 300 174 A1**
(43) Date of publication of application: **03.01.2024**
(21) Application number: 23182053.1
(22) Date of filing: 28.06.2023
(51) Int. Cl.: G02F 1/061

(54) **SYSTEMS AND APPARATUSES FOR OPTICAL MODULATION VIA MANIPULATION OF CHARGE CARRIERS**

(30) Priority: 29.06.2022 US 202263356705 P; 01.05.2023 US 202318310491
(71) Applicant: Meta Platforms Technologies, LLC, Menlo Park, CA 94025 (US)
(72) Inventor: PURVIS II, Lafe Joseph, Menlo Park, 94025 (US); OUDERKIRK, Andrew John, Menlo Park, 94025 (US); LANDIG, Renate Eva Klementine, Menlo Park, 94025 (US); VADIEE, Ehsan, Menlo Park, 94025 (US); PARK, Namseok, Menlo Park, 94025 (US); CHILDRESS, Kimberly, Menlo Park, 94025 (US); BOROMAND, Arman, Menlo Park, 94025 (US); MALHOTRA, Tanya, Menlo Park, 94025 (US); RAO, Tingling, Menlo Park, 94025 (US)
(74) Representative: Murgitroyd & Company

(57) **Abstract**

The disclosed apparatus may include an optical modulator including a first layer with at an organic layer and/or an organometallic layer; and a second layer with an extrinsic semiconductor layer and/or an electrode layer. Various other apparatuses and systems are also disclosed.

## Description

### CROSS REFERENCE TO RELATED APPLICATION

This application claims the benefit of U.S. Provisional Application No. 63/356,705, filed 29 June 2022, the disclosures of each of which are incorporated, in their entirety, by this reference.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is an illustration of an example material for optical modulation via manipulation of charge carriers.
FIG. 2 is a diagram of an example optical modulation of the material of FIG. 1.
FIG. 3 is a diagram of an example apparatus for optical modulation.
FIG. 4 is a diagram of an example apparatus for optical modulation.
FIG. 5 is a diagram of an example apparatus for optical modulation.
FIG. 6 is a diagram of an example apparatus for optical modulation.
FIG. 7 is an illustration of example augmented-reality glasses that may be used in connection with embodiments of this disclosure.
FIG. 8 is an illustration of an example virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION OF EXEMPLARY EMBODIMENTS

Alternate-reality systems (e.g., augmented-reality and/or virtual-reality systems) may be designed with the purpose to provide an immersive experience for the end-user, but various practical and technical hurdles may interfere with a successful design. An immersive visual experience may rely on display systems with high-fidelity, fast response times, and the ability to manipulate light in fine-tuned and intricate ways. In addition, optical elements that are too heavy or voluminous may result in head-mounted systems that are unwieldy or burdensome, interfering with immersion and overall user enjoyment. Low-volume and lightweight articles that enable precise and responsive control over various optical properties may enable many design possibilities for immersive alternate-reality systems, as well as various other applications in the field of optics.

The present disclosure is generally directed to optical modulation via manipulation of charge carriers in solid-state materials (e.g., in organic solid crystal materials). The manipulation of charge carriers in organic solid crystal materials may allow for the modulation of optical properties of these materials. Charge carriers may be manipulated, e.g., via the generation of charge depletion and/or accumulation regions and/or via charge injection. For example, applying voltage to organic solid crystal materials may generate charge depletion and/or accumulation regions. These charge depletion and/or accumulation regions may modulate optical properties such as refractive index, polarization, and/or absorption. Charge carriers may be manipulated at given frequencies, allowing for a corresponding frequency of modulation of optical properties. The manipulation of charge carriers may be performed with a variety of setups, including Schottky diodes, PN junctions, MOS capacitors, and/or organic field-effect transistors.

As will be explained in greater detail below, an optical modulator may include at least two layers. A first layer may include organic and/or organometallic material. A second layer may include an electrode or an extrinsic semiconductor. As systems and apparatuses described herein manipulate charge carriers in the first layer (and, e.g., the second layer) optical properties of the first layer (and, thus, the optical modulator as a whole) may be modulated.

The first layer (of organic and/or organometallic material) may include any of a variety of materials. In some examples, the first layer may include organic solid crystal material. Examples of organic solid crystal materials may include, without limitation, small molecules, macromolecules, oligomers, polymers, and organic semiconductors. In one example, the organic solid crystal material may include polycyclic aromatic compounds (e.g., anthracene, phenanthrene, etc.).

In some examples, the organic solid crystal material may be doped (e.g., to promote charge transport). For example, the organic solid crystal material may include p-type or n-type dopants. Dopants may be added to the organic soild crystal material via any suitable process including, without limitation, vapor deposition, solvent coating, and/or ion exchange. Examples of dopants that may be added to the organic solid crystal material include, without limitation, the following (and derivatives thereof): tetracyanoquinodimethane; diphenylbenzene-1,4-diamine; N4,N4'-(Biphenyl-4,4'-diyl)bis(N4'-(naphthalen-1-yl)-N4,N4'-diphenylbiphenyl-4,4'-diamine); N2,N2'-(9,9-Dimethyl-9H-fluorene-2,7-diyl)bis(9,9-dimethyl-N2,N7,N7-triphenyl-9H-fluorene-2,7-diamine); 2-(2-Methoxyphenyl)-1,3-dimethyl-1H-benzoimidazol-3-ium iodide; 2,2'-Bis[N,N-bis(4-methoxy-phenyl)amino]-9,9-spirobifluorene; N,N,N',N'-Tetrakis(4-methoxyphenyl)benzidine; Pyrazino[2,3-f][1,10]phenanthroline-2,3-dicarbonitrile; 2,3,5,6-Tetrafluoro-7,7,8,8-tetracyano-quinodimethane; Titanium oxide phthalocyanine; 4,4',4"-Tris(N,N-diphenyl-amino)triphenylamine; Copper(II) phthalocyanine; Poly{9,9-dimethyl-10-(9-(4-vinylbenzyl)-9H-carbazol-3-yl)-9,10-dihydroacridine}; Poly[(9,9-dioctylfluorenyl-2,7-diyl)-co-(4,4'-(N-(diphenylamine))-(2-cyanoisopropylphenyl))]; 2,2',7,7'-Tetrakis[N-naphthalenyl(phenyl)-amino]-9,9-spirobifluorene; Tris(phenylpyrazole)iridium; 9,10-Dihydro-9,9-dimethyl-10-(9-phenyl-9H-carbazol-3-yl)-acridine; N2,N2,N6,N6-Tetraphenylnaphthalene-2,6-diamine; N,N'-Di(naphthalen-2-yl)-N,N'-diphenylbenzene-1,4-diamine; 2,8-bis(4,6-diphenyl-1,3,5-triazin-2-yl)dibenzo-[b,d]furan; 4,6-Bis(3,5-di(pyridin-2-yl)phenyl)-2-methylpyrimidine; Poly[(9,9-bis(3'-(N,N-trimethylamino)propyl)-2,7-fluorene)-alt-1,4-phenylene]diiodide; phenanthroline; 8-Hydroxyquinoline sodium salt; 1,3,5-Tri(diphenylphosphoryl-phen-3-yl)benzene; 2,2'-(4,4'-(Phenylphosphoryl)bis(4,1-phenylene))bis(1-phenyl-1H-benzo[d]imidazole); 3,5-Di(pyren-1-yl)pyridine; ReO3; Rb2CO3; CsF; MoO3; or Cs2CO3.

In some examples, the optical modulator may include an interlayer that acts as a charge injection layer and/or a charge transport layer. The interlayer may be positioned between the first (organic/organometallic) layer and the second (extrinsic semiconductor/electrode) layer, such that one surface of the interlayer is in contact with the first layer and the opposite surface of the interlayer is in contact with the second layer.

The interlayer may include any suitable material. For example, the interlayer may include n-type or p-type organic or organometallic molecules. In some examples, the interlayer may include ambipolar organic or organometallic molecules. Examples of molecules that may compose the interlayer include, without limitation, the following (and derivatives thereof): tetracyanoquinodimethane; diphenylbenzene-1,4-diamine; N4,N4'-(Biphenyl-4,4'-diyl)bis(N4'-(naphthalen-1-yl)-N4,N4'-diphenylbiphenyl-4,4'-diamine); N2,N2'-(9,9-Dimethyl-9H-fluorene-2,7-diyl)bis(9,9-dimethyl-N2,N7,N7-triphenyl-9H-fluorene-2,7-diamine); 2-(2-Methoxyphenyl)-1,3-dimethyl-1H-benzoimidazol-3-ium iodide; 2,2'-Bis[N,N-bis(4-methoxyphenyl)amino]-9,9-spirobifluorene; N,N,N',N'-Tetrakis(4-methoxyphenyl)benzidine; Pyrazino[2,3-f][1,10]phenanthroline-2,3-dicarbonitrile; 2,3,5,6-Tetrafluoro-7,7,8,8-tetracyanoquinodimethane; Titanium oxide phthalocyanine; 4,4',4"-Tris(N,N-diphenyl-amino)triphenylamine; Copper(II) phthalocyanine; Poly{9,9-dimethyl-10-(9-(4-vinylbenzyl)-9H-carbazol-3-yl)-9,10-dihydroacridine}; Poly[(9,9-dioctylfluorenyl-2,7-diyl)-co-(4,4'-(N-(diphenylamine))-(2-cyanoisopropylphenyl))]; 2,2',7,7'-Tetrakis[N-naphthalenyl(phenyl)-amino]-9,9-spirobifluorene; Tris(phenylpyrazole)iridium; 9,10-Dihydro-9,9-dimethyl-10-(9-phenyl-9H-carbazol-3-yl)-acridine; N2,N2,N6,N6-Tetraphenylnaphthalene-2,6-diamine; N,N'-Di(naphthalen-2-yl)-N,N'-diphenylbenzene-1,4-diamine; 2,8-bis(4,6-diphenyl-1,3,5-triazin-2-yl)dibenzo-[b,d]furan; 4,6-Bis(3,5-di(pyridin-2-yl)phenyl)-2-methylpyrimidine; Poly[(9,9-bis(3'-(N,N-trimethylamino)propyl)-2,7-fluorene)-alt-1,4-phenylene]diiodide; phenanthroline; 8-Hydroxyquinoline sodium salt; 1,3,5-Tri(diphenylphosphoryl-phen-3-yl)benzene; 2,2'-(4,4'-(Phenylphosphoryl)bis(4,1-phenylene))bis(1-phenyl-1H-benzo[d]imidazole); 3,5-Di(pyren-1-yl)pyridine; ReO3; Rb2CO3; CsF; MoO3; or Cs2CO3.

In examples where the second layer of the optical modulator is an electrode layer, the electrode layer may include any suitable material. In some examples, the electrode layer may include metal or a metal derivative. Examples of materials that may compose the electrode layer include, without limitation: gold, aluminum, magnesium, calcium, indium tin oxide, fluorine-doped tin oxide, zinc oxide, doped zinc oxide, cadmium oxide, doped cadmium oxide, titanium nitride, molybdenum disulfide, doped molybdenum disulfide, molybdenum(III) sulfide, doped molybdenum(III) sulfide, and lithium fluoride. In some examples, the electrode layer may include an allotrope of carbon. Examples of materials that may compose the electrode layer include, without limitation, carbon nanotubes and graphene. In various examples, the electrode layer may include organic and/or organometallic material. Examples of materials that may compose the electrode layer include, without limitation, a conductive oligomer and a conductive polymer.

In some examples, a voltage may be applied to the optical modulator. For example, one or more systems or apparatuses described herein may apply a predetermined voltage to the optical modulator. By applying voltage to the optical modulator, these systems may manipulate charge carriers within the optical modulator (including, e.g., in the first (e.g., organic solid crystal) layer of the optical modulator). The manipulation of charge carriers in the optical modulator may modulate one or more optical properties of the optical modulator (including, e.g., of the first layer of the optical modulator). Thus, systems and apparatuses described herein may modulate an optical property of the optical modulator. For example, these systems may modulate a refractive index of the optical modulator, an absorption property of the optical modulator, and/or a polarization property of the optical modulator.

The systems and apparatuses described herein may modulate a refractive index by any suitable amount. For example, these systems may modulate the refractive index by at least 0.0005, by at least 0.005, or by at least 0.05. The systems and apparatuses described herein may modulate an absorption property of the optical modulator (e.g., of the first (e.g., organic solid crystal) layer of the optical modulator) by any suitable amount. For example, these systems may modulate the average absorption within a predetermined range of wavelengths by at least 10 percent, by at least 100 percent, or by at least 200 percent. The aforementioned predetermined range of wavelengths may include any suitable range of wavelengths. For example, the predetermined range of wavelengths may include a range approximately corresponding to the visible light spectrum. Examples include, without limitation, 380 to 780 nanometers (nm), 380 to 750 nm, 400 to 770 nm, 400 to 700 nm, 380 to 780 nm, and 400 to 720 nm.

In some examples, the systems and apparatuses described herein may modulate a birefringence (i.e., an index difference between two predetermined principal axes) of the optical modulator by applying voltage to the optical modulator. These systems and apparatuses may modulate the birefringence by any suitable amount. For example, these systems and apparatuses may modulate the birefringence by at least 0.0005, by at least 0.005, or by at least 0.05.

In some examples, the systems and apparatuses described herein may reverse the manipulation of the charge carriers to return the optical modulator to an original state (e.g., by reversing the voltage applied to the optical modulator, etc.). Furthermore, these systems and apparatuses may modulate one or more optical properties within a predetermined response time (e.g., an amount of time to modulate an optical property from a first predetermined state to a second predetermined state). Examples of response times for modulating one or more optical properties of the optical modulator include, without limitation, about 20 milliseconds or less, about 17 milliseconds or less, about 14 milliseconds or less, about 10 milliseconds or less, about 9 milliseconds or less, about 7 milliseconds or less, about 5 milliseconds or less, about 2 milliseconds or less, and about 1 milliseconds or less. In some examples, the systems and apparatuses may periodically modulate the optical modulator (e.g., back and forth between a neutral state and an actively modulated state). Examples of frequencies at which these systems and apparatuses may modulate the optical modulator include, without limitation, 60 hertz or more, 75 hertz or more, 100 hertz or more, 120 hertz or more, 144 hertz or more, 240 hertz or more, 500 hertz or more, and 1000 hertz or more.

In some examples, an apparatus may include the optical modulator to achieve an optical effect. For example, the optical modulator may form a part of an angular selective optical filter. As another example, the optical modulator may form a part of an active reflective polarizer. In one example, the optical modulator may form a part of an active grating. As another example, the optical modulator may form a part of a Mach-Zehnder interferometer.

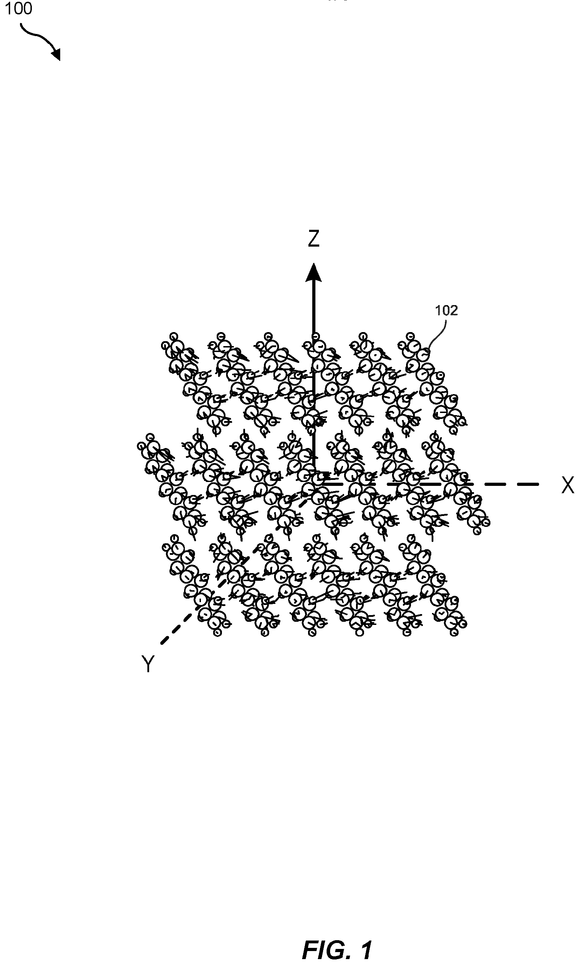

FIG. 1 is an illustration of an example material 100 for optical modulation via manipulation of charge carriers. As shown in FIG. 1, material 100 may include anthracene crystal. Thus, for example, a molecule 102 may represent an anthracene molecule. In one example, material 100 may represent a composition of an organic solid crystal layer of the optical modulator described herein. In various examples, one or more of the systems and apparatuses described herein may manipulate charge carriers of material 100. For example, these systems and apparatuses may add about one electron to each molecule of material 100, add about one hole to each molecule of material 100, and/or revert material 100 to having no net charge per molecule (e.g., no surplus electrons or holes).

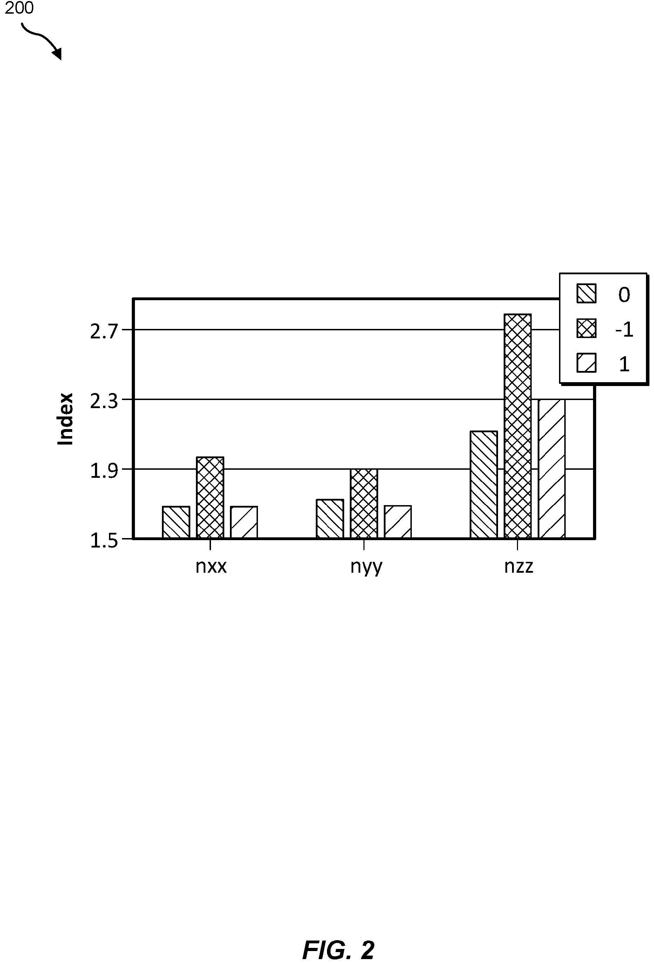

FIG. 2 is a diagram of an example optical modulation 200 of material 100 of FIG. 1. As shown in FIG. 2, material 100 may be anisotropic. Thus, refractive indices nxx, nyy, and nzz may describe material 100, along the x, y, and z axes, respectively. The refractive indices may be modulated according to charge carrier manipulation of material 100. Thus, FIG. 2 shows the respective active indices when each molecule of material 100 has, on average, no charge ("0"), one electron added ("-1"), or one hole added ("1"). As can be appreciated from FIG. 2, manipulation of the charge carriers may modulate these refractive indices (and, e.g., the birefringence) of material 100.

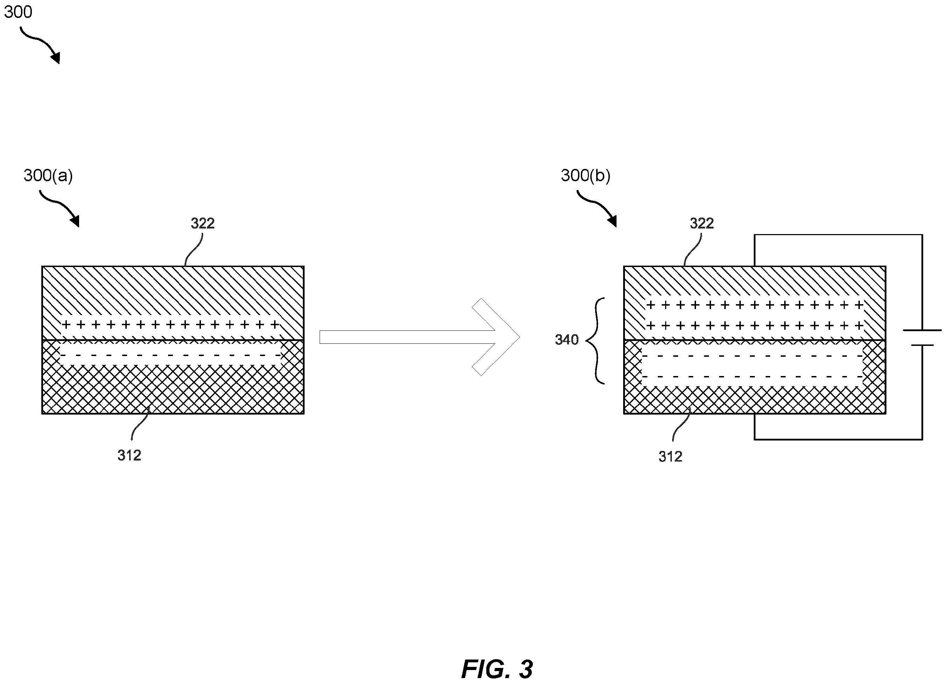

FIG. 3 is a diagram of an example apparatus 300 for optical modulation. As shown in FIG. 3, apparatus 300 may be in a state 300(a) or a state 300(b). Furthermore, apparatus 300 may include a layer 312 and a layer 322. In one example, layer 312 may represent a layer of organic solid crystal material. In addition, in some examples layer 312 may be p-doped (e.g., promoting charge transport). Furthermore, in some examples, layer 322 may represent a metal layer or an n-type semiconductor layer. Thus, in some examples, apparatus 300 may act as a Schottky diode or as a p-n junction, with one of the layers (e.g., layer 312) being organic solid crystal material. Accordingly, when a voltage is applied to apparatus 300 (e.g., with a reverse bias), as shown in state 300(b), a depletion region 340 may form. The presence of depletion region 340 may modulate one or more optical properties of apparatus 300 (e.g., of layer 312). Thus, an optical property of apparatus 300 may be modulated between at least two different states according to the application of voltage, as shown in states 300(a) and 300(b) of apparatus 300. Although not pictured, in one example an electron/hole injection layer may be inserted at the interface of layers 312 and 322 to promote charge transport.

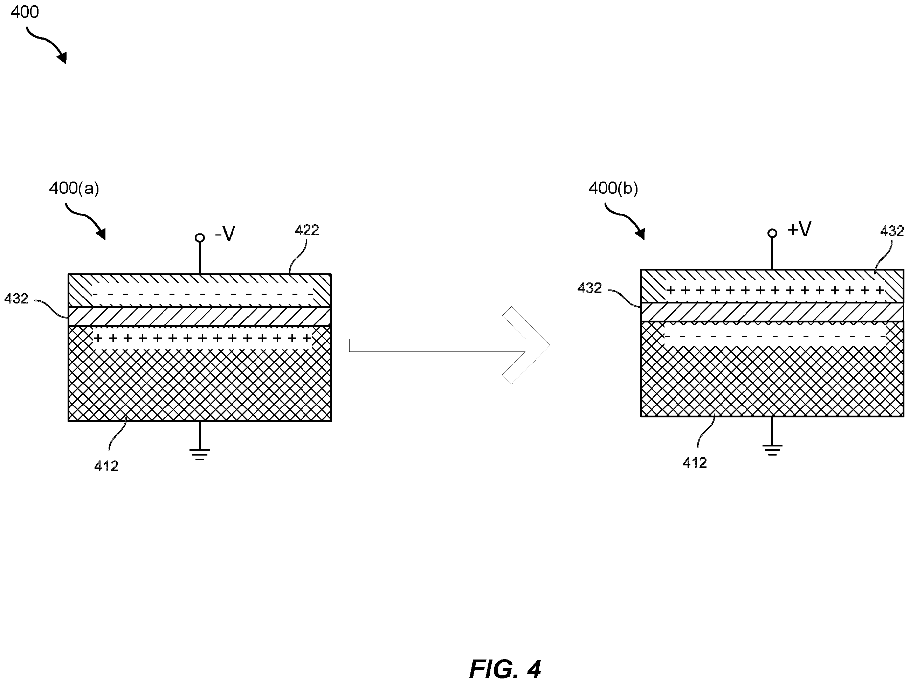

FIG. 4 is a diagram of an example apparatus 400 for optical modulation. As shown in FIG. 4, apparatus 400 may be in a state 400(a) or a state 400(b). Furthermore, apparatus 400 may include a layer412, a layer422, and a layer432. In one example, layer412 may represent a layer of organic solid crystal material. In addition, in some examples layer 412 may be p-doped. Furthermore, in some examples, layer 422 may represent a metal layer. Additionally, in some examples, layer 432 may represent an oxide layer. Thus, in some examples, apparatus 400 may act as a metal-oxide-semiconductor ("MOS") capacitor, with, e.g., organic solid crystal material in the role of the semiconductor layer (e.g., layer 412). Accordingly, when a negative voltage is applied to apparatus 400, as represented in state 400(a), a charge accumulation may result in layer 412. When a positive voltage is applied to apparatus 400, as represented in state 400(b), a charge depletion may result in layer 412. The presence of the charge accumulation versus the charge depletion may modulate at least one optical property of layer 412. Thus, an optical property of apparatus 400 may be modulated between at least two different states according to the application of voltage, as shown in states 400(a) and 400(b) of apparatus 400.

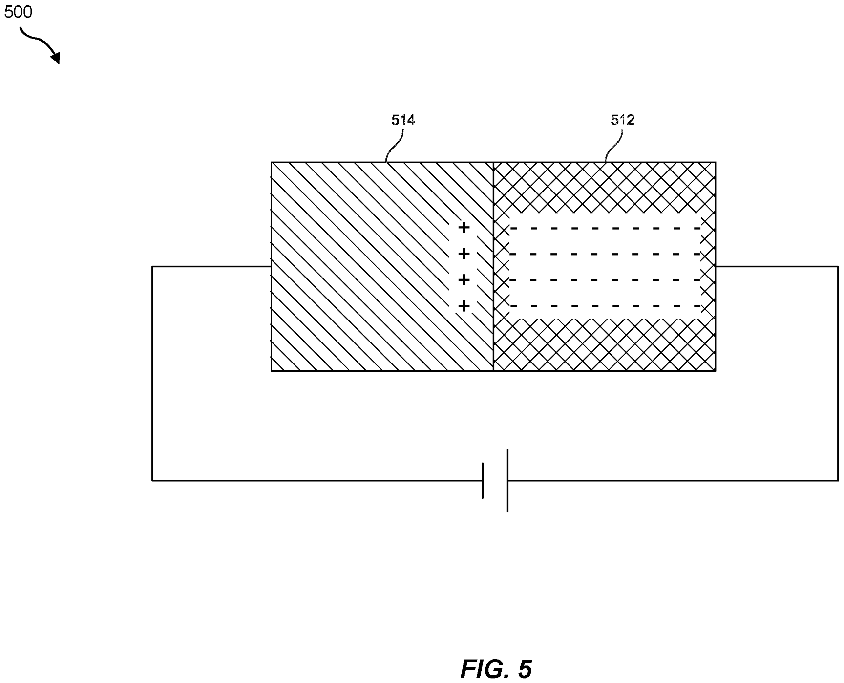

FIG. 5 is a diagram of an example apparatus 500 for optical modulation. As shown in FIG. 5, apparatus 500 may include a layer 512 and a layer 514. In one example, layer 512 may represent a layer of organic solid crystal material. In addition, in some examples layer 512 may be p-doped. Furthermore, in some examples, layer 514 may represent a metal layer or an n-type semiconductor layer. Thus, in some examples, apparatus 500 may act as a Schottky diode or as a p-n junction, with one of the layers (e.g., layer 512) being organic solid crystal material. Accordingly, a voltage being applied to apparatus 500 (e.g., with a forward bias), as shown in state 500(b), may result in a charge injection. The charge injection may modulate one or more optical properties of apparatus 500 (e.g., of layer 512). Thus, an optical property of apparatus 500 may be modulated according to the application of voltage.

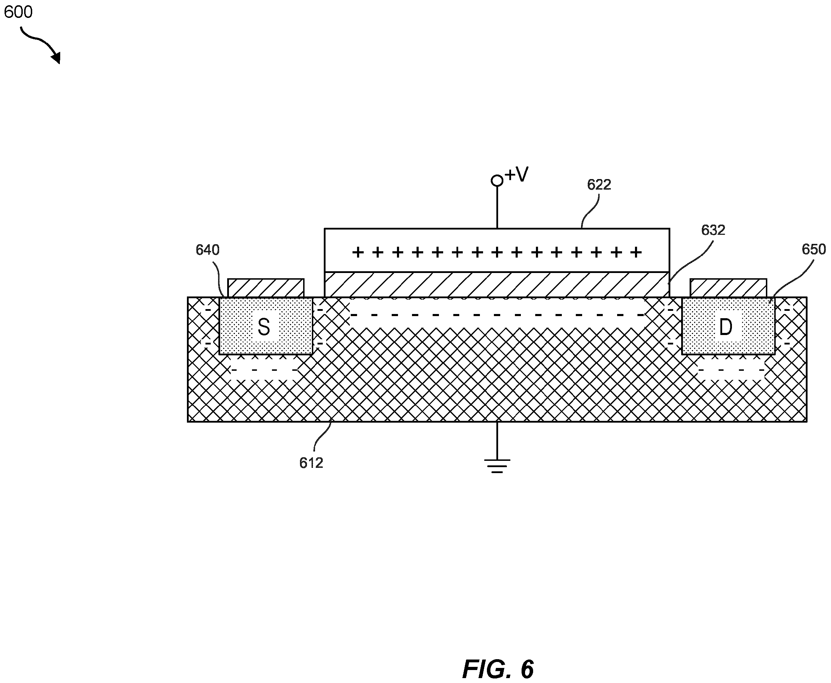

FIG. 6 is a diagram of an example apparatus 600 for optical modulation. As shown in FIG. 6, apparatus 600 may include a layer 612, a layer 622, a layer 632, a source 640, and a drain 650. In one example, layer 612 may represent a layer of organic solid crystal material. In addition, in some examples layer 612 may be p-doped. Furthermore, in some examples, layer 622 may represent a metal layer. Additionally, in some examples, layer 632 may represent an oxide layer. Thus, in some examples, apparatus 600 may act as an organic field-effect transistor ("OFET"). Accordingly, a positive voltage being applied to apparatus 600 may result in a charge injection. The charge injection may modulate at least one optical property of layer 612. Thus, an optical property of apparatus 600 may be modulated between at least two different states according to the application of voltage.

### Example Embodiments

Example 1: An apparatus may include an optical modulator including a first layer with at an organic layer and/or an organometallic layer; and a second layer with an extrinsic semiconductor layer and/or an electrode layer.

Example 2: The apparatus of Example 1, where the optical modulator further includes an interlayer with a first surface in contact with the first layer and a second surface in contact with the second layer, the interlayer including a charge injection layer and/or a charge transport layer.

Example 3: The apparatus of any of Examples 1 and 2, where the interlayer includes at least one of n-type organic molecules, n-type organometallic molecules, p-type organic molecules, p-type organometallic molecules, ambipolar organic molecules, or ambipolar organometallic molecules.

Example 4: The apparatus of any of Examples 1-3, where the interlayer includes at least one of: tetracyanoquinodimethane; diphenylbenzene-1,4-diamine; N4,N4'-(Biphenyl-4,4'-diyl)bis(N4'-(naphthalen-1-yl)-N4,N4'-diphenylbiphenyl-4,4'-diamine); N2,N2'-(9,9-Dimethyl-9H-fluorene-2,7-diyl)bis(9,9-dimethyl-N2,N7,N7-triphenyl-9H-fluorene-2,7-diamine); 2-(2-Methoxyphenyl)-1,3-dimethyl-1H-benzoimidazol-3-ium iodide; 2,2'-Bis[N,N-bis(4-methoxy-phenyl)amino]-9,9-spirobifluorene; N,N,N',N'-Tetrakis(4-methoxyphenyl)benzidine; Pyrazino[2,3-f][1,10]phenanthroline-2,3-dicarbonitrile; 2,3,5,6-Tetrafluoro-7,7,8,8-tetracyanoquinodimethane; Titanium oxide phthalocyanine; 4,4',4"-Tris(N,N-diphenyl-amino)triphenylamine; Copper(II) phthalocyanine; Poly{9,9-dimethyl-10-(9-(4-vinylbenzyl)-9H-carbazol-3-yl)-9,10-dihydroacridine}; Poly[(9,9-dioctylfluorenyl-2,7-diyl)-co-(4,4'-(N-(diphenylamine))-(2-cyanoisopropylphenyl))]; 2,2',7,7'-Tetrakis[N-naphthalenyl(phenyl)-amino]-9,9-spirobifluorene; Tris(phenylpyrazole)iridium; 9,10-Dihydro-9,9-dimethyl-10-(9-phenyl-9H-carbazol-3-yl)-acridine; N2,N2,N6,N6-Tetraphenylnaphthalene-2,6-diamine; N,N'-Di(naphthalen-2-yl)-N,N'-diphenylbenzene-1,4-diamine; 2,8-bis(4,6-diphenyl-1,3,5-triazin-2-yl)dibenzo-[b,d]furan; 4,6-Bis(3,5-di(pyridin-2-yl)phenyl)-2-methylpyrimidine; Poly[(9,9-bis(3'-(N,N-trimethylamino)propyl)-2,7-fluorene)-alt-1,4-phenylene]diiodide; phenanthroline; 8-Hydroxyquinoline sodium salt; 1,3,5-Tri(diphenylphosphoryl-phen-3-yl)benzene; 2,2'-(4,4'-(Phenylphosphoryl)bis(4,1-phenylene))bis(1-phenyl-1H-benzo[d]imidazole); 3,5-Di(pyren-1-yl)pyridine; ReO3; Rb2CO3; CsF; MoO3; or Cs2CO3.

Example 5: The apparatus of any of Examples 1-4, where the optical modulator further includes an interlayer including a first surface in contact with the first layer and a second surface in contact with the second layer, the interlayer including an oxide layer.

Example 6: The apparatus of any of Examples 1-5, where the electrode layer includes at least one of: (1) a metal and/or a metal derivative, (2) an allotrope of carbon, or(3) an organic material and/or an organometallic material.

Example 7: The apparatus of any of Examples 1-6, where the electrode layer includes at least one of: gold, aluminum, magnesium, calcium, indium tin oxide, fluorine-doped tin oxide, zinc oxide, doped zinc oxide, cadmium oxide, doped cadmium oxide, titanium nitride, molybdenum disulfide, doped molybdenum disulfide, molybdenum(III) sulfide, doped molybdenum(III) sulfide, or lithium fluoride.

Example 8: The apparatus of any of Examples 1-7, where the electrode layer includes carbon nanotubes and/or graphene

Example 9: The apparatus of any of Examples 1-8, where the electrode layer includes a conductive oligomer and/or a conductive polymer.

Example 10: The apparatus of any of Examples 1-9, where the first layer includes p-type dopants and/or n-type dopants.

Example 11: The apparatus of any of Examples 1-10, where the first layer is doped with at least one of: tetracyanoquinodimethane; diphenylbenzene-1,4-diamine; N4,N4'-(Biphenyl-4,4'-diyl)bis(N4'-(naphthalen-1-yl)-N4,N4'-diphenylbiphenyl-4,4'-diamine); N2,N2'-(9,9-Dimethyl-9H-fluorene-2,7-diyl)bis(9,9-dimethyl-N2,N7,N7-triphenyl-9H-fluorene-2,7-diamine); 2-(2-Methoxyphenyl)-1,3-dimethyl-1H-benzoimidazol-3-ium iodide; 2,2'-Bis[N,N-bis(4-methoxy-phenyl)amino]-9,9-spirobifluorene; N,N,N',N'-Tetrakis(4-methoxyphenyl)benzidine; Pyrazino[2,3-f][1,10]phenanthroline-2,3-dicarbonitrile; 2,3,5,6-Tetrafluoro-7,7,8,8-tetracyanoquinodimethane; Titanium oxide phthalocyanine; 4,4',4"-Tris(N,N-diphenyl-amino)triphenylamine; Copper(II) phthalocyanine; Poly{9,9-dimethyl-10-(9-(4-vinylbenzyl)-9H-carbazol-3-yl)-9,10-dihydroacridine}; Poly[(9,9-dioctylfluorenyl-2,7-diyl)-co-(4,4'-(N-(diphenylamine))-(2-cyanoisopropylphenyl))]; 2,2',7,7'-Tetrakis[N-naphthalenyl(phenyl)-amino]-9,9-spirobifluorene; Tris(phenylpyrazole)iridium; 9,10-Dihydro-9,9-dimethyl-10-(9-phenyl-9H-carbazol-3-yl)-acridine; N2,N2,N6,N6-Tetraphenylnaphthalene-2,6-diamine; N,N'-Di(naphthalen-2-yl)-N,N'-diphenylbenzene-1,4-diamine; 2,8-bis(4,6-diphenyl-1,3,5-triazin-2-yl)dibenzo-[b,d]furan; 4,6-Bis(3,5-di(pyridin-2-yl)phenyl)-2-methylpyrimidine; Poly[(9,9-bis(3'-(N,N-trimethylamino)propyl)-2,7-fluorene)-alt-1,4-phenylene]diiodide; phenanthroline; 8-Hydroxyquinoline sodium salt; 1,3,5-Tri(diphenylphosphoryl-phen-3-yl)benzene; 2,2'-(4,4'-(Phenylphosphoryl)bis(4,1-phenylene))bis(1-phenyl-1H-benzo[d]imidazole); 3,5-Di(pyren-1-yl)pyridine; ReO3; Rb2CO3; CsF; MoO3; or Cs2CO3.

Example 12: An apparatus may include an optical modulator that, when a predetermined voltage is applied, varies in a refractive index, an absorption, and/or a polarization property.

Example 13: The apparatus of Example 12, where when the predetermined voltage is applied to the optical modulator, the optical modulator varies in birefringence.

Example 14: The apparatus of any of Examples 12-13, where when the predetermined voltage is applied to the optical modulator, the optical modulator varies in birefringence by about 0.005 or more.

Example 15: The apparatus of any of Examples 12-14, where when the predetermined voltage is applied to the optical modulator, the optical modulator varies in the refractive index by about 0.005 or more.

Example 16: The apparatus of any of Examples 12-15, where when the predetermined voltage is applied to the optical modulator, the optical modulator varies in the absorption within a predetermined range of wavelength by a factor of about 2 or more.

Example 17: A system may include an optical modulator including: a first layer with an organic layer and/or an organometallic layer and a second layer with an extrinsic semiconductor layer and/or an electrode layer; a voltage source that, when applied to the optical modulator, causes the optical modulator to vary in a refractive index, an absorption, and/or a polarization property.

Example 18: The system of Example 17, further including a head-mounted display that includes the optical modulator.

Example 19: The system of any of Examples 17-18, further including an artificial-reality system that includes the head-mounted display.

Example 20: The system of any of Examples 17-19, where the optical modulator further includes an interlayer including a first surface in contact with the first layer and a second surface in contact with the second layer, where the interlayer includes a charge injection layer and/or a charge transport layer.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

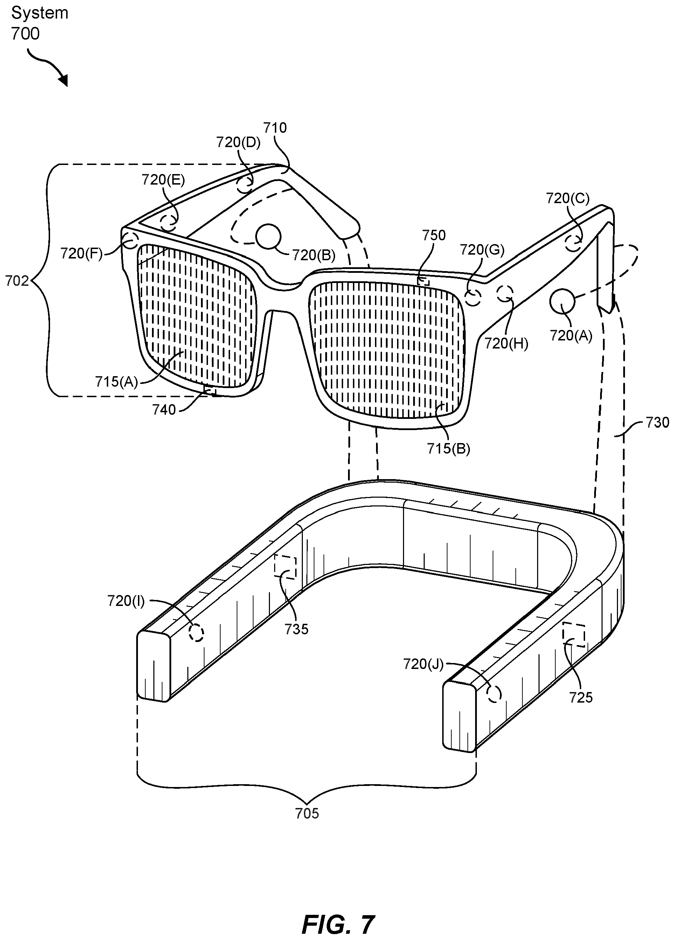

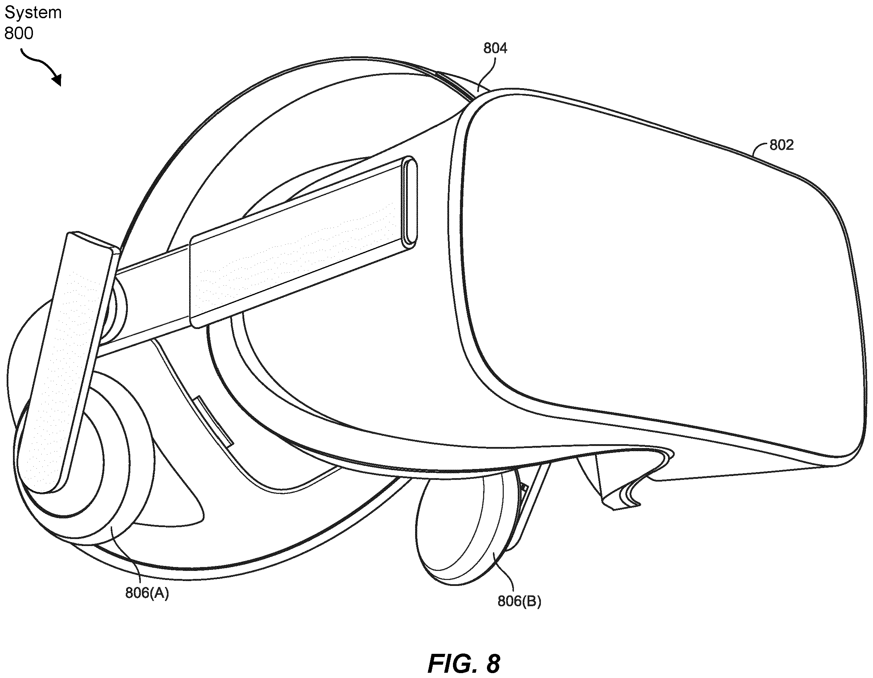

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 700 in FIG. 7) or that visually immerses a user in an artificial reality (such as, e.g., virtual-reality system 800 in FIG. 8). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 7, augmented-reality system 700 may include an eyewear device 702 with a frame 710 configured to hold a left display device 715(A) and a right display device 715(B) in front of a user's eyes. Display devices 715(A) and 715(B) may act together or independently to present an image or series of images to a user. While augmented-reality system 700 includes two displays, embodiments of this disclosure may be implemented in augmented-reality systems with a single NED or more than two NEDs.

In some embodiments, augmented-reality system 700 may include one or more sensors, such as sensor 740. Sensor 740 may generate measurement signals in response to motion of augmented-reality system 700 and may be located on substantially any portion of frame 710. Sensor 740 may represent one or more of a variety of different sensing mechanisms, such as a position sensor, an inertial measurement unit (IMU), a depth camera assembly, a structured light emitter and/or detector, or any combination thereof. In some embodiments, augmented-reality system 700 may or may not include sensor 740 or may include more than one sensor. In embodiments in which sensor 740 includes an IMU, the IMU may generate calibration data based on measurement signals from sensor 740. Examples of sensor 740 may include, without limitation, accelerometers, gyroscopes, magnetometers, other suitable types of sensors that detect motion, sensors used for error correction of the IMU, or some combination thereof.

In some examples, augmented-reality system 700 may also include a microphone array with a plurality of acoustic transducers 720(A)-720(J), referred to collectively as acoustic transducers 720. Acoustic transducers 720 may represent transducers that detect air pressure variations induced by sound waves. Each acoustic transducer 720 may be configured to detect sound and convert the detected sound into an electronic format (e.g., an analog or digital format). The microphone array in FIG. 7 may include, for example, ten acoustic transducers: 720(A) and 720(B), which may be designed to be placed inside a corresponding ear of the user, acoustic transducers 720(C), 720(D), 720(E), 720(F), 720(G), and 720(H), which may be positioned at various locations on frame 710, and/or acoustic transducers 720(I) and 720(J), which may be positioned on a corresponding neckband 705.

In some embodiments, one or more of acoustic transducers 720(A)-(J) may be used as output transducers (e.g., speakers). For example, acoustic transducers 720(A) and/or 720(B) may be earbuds or any other suitable type of headphone or speaker.

The configuration of acoustic transducers 720 of the microphone array may vary. While augmented-reality system 700 is shown in FIG. 7 as having ten acoustic transducers 720, the number of acoustic transducers 720 may be greater or less than ten. In some embodiments, using higher numbers of acoustic transducers 720 may increase the amount of audio information collected and/or the sensitivity and accuracy of the audio information. In contrast, using a lower number of acoustic transducers 720 may decrease the computing power required by an associated controller 750 to process the collected audio information. In addition, the position of each acoustic transducer 720 of the microphone array may vary. For example, the position of an acoustic transducer 720 may include a defined position on the user, a defined coordinate on frame 710, an orientation associated with each acoustic transducer 720, or some combination thereof.

Acoustic transducers 720(A) and 720(B) may be positioned on different parts of the user's ear, such as behind the pinna, behind the tragus, and/or within the auricle or fossa. Or, there may be additional acoustic transducers 720 on or surrounding the ear in addition to acoustic transducers 720 inside the ear canal. Having an acoustic transducer 720 positioned next to an ear canal of a user may enable the microphone array to collect information on how sounds arrive at the ear canal. By positioning at least two of acoustic transducers 720 on either side of a user's head (e.g., as binaural microphones), augmented-reality device 700 may simulate binaural hearing and capture a 3D stereo sound field around about a user's head. In some embodiments, acoustic transducers 720(A) and 720(B) may be connected to augmented-reality system 700 via a wired connection 730, and in other embodiments acoustic transducers 720(A) and 720(B) may be connected to augmented-reality system 700 via a wireless connection (e.g., a BLUETOOTH connection). In still other embodiments, acoustic transducers 720(A) and 720(B) may not be used at all in conjunction with augmented-reality system 700.

Acoustic transducers 720 on frame 710 may be positioned in a variety of different ways, including along the length of the temples, across the bridge, above or below display devices 715(A) and 715(B), or some combination thereof. Acoustic transducers 720 may also be oriented such that the microphone array is able to detect sounds in a wide range of directions surrounding the user wearing the augmented-reality system 700. In some embodiments, an optimization process may be performed during manufacturing of augmented-reality system 700 to determine relative positioning of each acoustic transducer 720 in the microphone array.

In some examples, augmented-reality system 700 may include or be connected to an external device (e.g., a paired device), such as neckband 705. Neckband 705 generally represents any type or form of paired device. Thus, the following discussion of neckband 705 may also apply to various other paired devices, such as charging cases, smart watches, smart phones, wrist bands, other wearable devices, hand-held controllers, tablet computers, laptop computers, other external compute devices, etc.

As shown, neckband 705 may be coupled to eyewear device 702 via one or more connectors. The connectors may be wired or wireless and may include electrical and/or non-electrical (e.g., structural) components. In some cases, eyewear device 702 and neckband 705 may operate independently without any wired or wireless connection between them. While FIG. 7 illustrates the components of eyewear device 702 and neckband 705 in example locations on eyewear device 702 and neckband 705, the components may be located elsewhere and/or distributed differently on eyewear device 702 and/or neckband 705. In some embodiments, the components of eyewear device 702 and neckband 705 may be located on one or more additional peripheral devices paired with eyewear device 702, neckband 705, or some combination thereof.

Pairing external devices, such as neckband 705, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 700 may be provided by a paired device or shared between a paired device and an eyewear device, thus reducing the weight, heat profile, and form factor of the eyewear device overall while still retaining desired functionality. For example, neckband 705 may allow components that would otherwise be included on an eyewear device to be included in neckband 705 since users may tolerate a heavier weight load on their shoulders than they would tolerate on their heads. Neckband 705 may also have a larger surface area over which to diffuse and disperse heat to the ambient environment. Thus, neckband 705 may allow for greater battery and computation capacity than might otherwise have been possible on a stand-alone eyewear device. Since weight carried in neckband 705 may be less invasive to a user than weight carried in eyewear device 702, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 705 may be communicatively coupled with eyewear device 702 and/or to other devices. These other devices may provide certain functions (e.g., tracking, localizing, depth mapping, processing, storage, etc.) to augmented-reality system 700. In the embodiment of FIG. 7, neckband 705 may include two acoustic transducers (e.g., 720(I) and 720(J)) that are part of the microphone array (or potentially form their own microphone subarray). Neckband 705 may also include a controller 725 and a power source 735.

Acoustic transducers 720(I) and 720(J) of neckband 705 may be configured to detect sound and convert the detected sound into an electronic format (analog or digital). In the embodiment of FIG. 7, acoustic transducers 720(I) and 720(J) may be positioned on neckband 705, thereby increasing the distance between the neckband acoustic transducers 720(I) and 720(J) and other acoustic transducers 720 positioned on eyewear device 702. In some cases, increasing the distance between acoustic transducers 720 of the microphone array may improve the accuracy of beamforming performed via the microphone array. For example, if a sound is detected by acoustic transducers 720(C) and 720(D) and the distance between acoustic transducers 720(C) and 720(D) is greater than, e.g., the distance between acoustic transducers 720(D) and 720(E), the determined source location of the detected sound may be more accurate than if the sound had been detected by acoustic transducers 720(D) and 720(E).

Controller 725 of neckband 705 may process information generated by the sensors on neckband 705 and/or augmented-reality system 700. For example, controller 725 may process information from the microphone array that describes sounds detected by the microphone array. For each detected sound, controller 725 may perform a direction-of-arrival (DOA) estimation to estimate a direction from which the detected sound arrived at the microphone array. As the microphone array detects sounds, controller 725 may populate an audio data set with the information. In embodiments in which augmented-reality system 700 includes an inertial measurement unit, controller 725 may compute all inertial and spatial calculations from the IMU located on eyewear device 702. A connector may convey information between augmented-reality system 700 and neckband 705 and between augmented-reality system 700 and controller 725. The information may be in the form of optical data, electrical data, wireless data, or any other transmittable data form. Moving the processing of information generated by augmented-reality system 700 to neckband 705 may reduce weight and heat in eyewear device 702, making it more comfortable to the user.

Power source 735 in neckband 705 may provide power to eyewear device 702 and/or to neckband 705. Power source 735 may include, without limitation, lithium ion batteries, lithium-polymer batteries, primary lithium batteries, alkaline batteries, or any other form of power storage. In some cases, power source 735 may be a wired power source. Including power source 735 on neckband 705 instead of on eyewear device 702 may help better distribute the weight and heat generated by power source 735.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 800 in FIG. 8, that mostly or completely covers a user's field of view. Virtual-reality system 800 may include a front rigid body 802 and a band 804 shaped to fit around a user's head. Virtual-reality system 800 may also include output audio transducers 806(A) and 806(B). Furthermore, while not shown in FIG. 8, front rigid body 802 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 700 and/or virtual-reality system 800 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 700 and/or virtual-reality system 800 may include microLED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 700 and/or virtual-reality system 800 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. An apparatus comprising:
an optical modulator comprising:
a first layer comprising at least one of an organic layer or an organometallic layer; and
a second layer comprising at least one of an extrinsic semiconductor layer or an electrode layer.

2. The apparatus of claim 1, wherein the optical modulator further comprises an interlayer comprising a first surface in contact with the first layer and a second surface in contact with the second layer, the interlayer comprising at least one of a charge injection layer or a charge transport layer.

3. The apparatus of claim 2, wherein the interlayer comprises at least one of n-type organic molecules, n-type organometallic molecules, p-type organic molecules, p-type organometallic molecules, ambipolar organic molecules, or ambipolar organometallic molecules.

4. The apparatus of claim 3, wherein the interlayer comprises at least one of: tetracyanoquinodimethane; diphenylbenzene-1,4-diamine; N4,N4'-(Biphenyl-4,4'-diyl)bis(N4'-(naphthalen-1-yl)-N4,N4'-diphenylbiphenyl-4,4'-diamine); N2,N2'-(9,9-Dimethyl-9H-fluorene-2,7-diyl)bis(9,9-dimethyl-N2,N7,N7-triphenyl-9H-fluorene-2,7-diamine); 2-(2-Methoxyphenyl)-1,3-dimethyl-1H-benzoimidazol-3-ium iodide; 2,2'-Bis[N,N-bis(4-methoxy-phenyl)amino]-9,9-spirobifluorene; N,N,N',N'-Tetrakis(4-methoxyphenyl)benzidine; Pyrazino[2,3-f][1,10]phenanthroline-2,3-dicarbonitrile; 2,3,5,6-Tetrafluoro-7,7,8,8-tetracyanoquinodimethane; Titanium oxide phthalocyanine; 4,4',4"-Tris(N,N-diphenyl-amino)triphenylamine; Copper(II) phthalocyanine; Poly{9,9-dimethyl-10-(9-(4-vinylbenzyl)-9H-carbazol-3-yl)-9,10-dihydroacridine}; Poly[(9,9-dioctylfluorenyl-2,7-diyl)-co-(4,4'-(N-(diphenylamine))-(2-cyanoisopropylphenyl))]; 2,2',7,7'-Tetrakis[N-naphthalenyl(phenyl)-amino]-9,9-spirobifluorene; Tris(phenylpyrazole)iridium; 9,10-Dihydro-9,9-dimethyl-10-(9-phenyl-9H-carbazol-3-yl)-acridine; N2,N2,N6,N6-Tetraphenylnaphthalene-2,6-diamine; N,N'-Di(naphthalen-2-yl)-N,N'-diphenylbenzene-1,4-diamine; 2,8-bis(4,6-diphenyl-1,3,5-triazin-2-yl)dibenzo-[b,d]furan; 4,6-Bis(3,5-di(pyridin-2-yl)phenyl)-2-methylpyrimidine; Poly[(9,9-bis(3'-(N,N-trimethylamino)propyl)-2,7-fluorene)-alt-1,4-phenylene]diiodide; phenanthroline; 8-Hydroxyquinoline sodium salt; 1,3,5-Tri(diphenylphosphoryl-phen-3-yl)benzene; 2,2'-(4,4'-(Phenylphosphoryl)bis(4,1-phenylene))bis(1-phenyl-1H-benzo[d]imidazole); 3,5-Di(pyren-1-yl)pyridine; ReO3; Rb2CO3; CsF; MoO3; or Cs2CO3.

5. The apparatus of claim 1, wherein the optical modulator further comprises an interlayer comprising a first surface in contact with the first layer and a second surface in contact with the second layer, the interlayer comprising an oxide layer.

6. The apparatus of claim 1, wherein the electrode layer comprises at least one of:
at least one of a metal or a metal derivative;
an allotrope of carbon; or
at least one of an organic material or an organometallic material.

7. The apparatus of claim 6, wherein the electrode layer comprises at least one of: gold, aluminum, magnesium, calcium, indium tin oxide, fluorine-doped tin oxide, zinc oxide, doped zinc oxide, cadmium oxide, doped cadmium oxide, titanium nitride, molybdenum disulfide, doped molybdenum disulfide, molybdenum(III) sulfide, doped molybdenum(III) sulfide, or lithium fluoride.

8. The apparatus of claim 6, wherein the electrode layer comprises at least one of carbon nanotubes or graphene.

9. The apparatus of claim 6, wherein the electrode layer comprises at least one of a conductive oligomer or a conductive polymer.

10. The apparatus of claim 1, wherein the first layer comprises at least one of p-type dopants or n-type dopants.

11. The apparatus of claim 1, wherein the first layer is doped with at least one of: tetracyanoquinodimethane; diphenylbenzene-1,4-diamine; N4,N4'-(Biphenyl-4,4'-diyl)bis(N4'-(naphthalen-1-yl)-N4,N4'-diphenylbiphenyl-4,4'-diamine); N2,N2'-(9,9-Dimethyl-9H-fluorene-2,7-diyl)bis(9,9-dimethyl-N2,N7,N7-triphenyl-9H-fluorene-2,7-diamine); 2-(2-Methoxyphenyl)-1,3-dimethyl-1H-benzoimidazol-3-ium iodide; 2,2'-Bis[N,N-bis(4-methoxy-phenyl)amino]-9,9-spirobifluorene; N,N,N',N'-Tetrakis(4-methoxyphenyl)benzidine; Pyrazino[2,3-f][1,10]phenanthroline-2,3-dicarbonitrile; 2,3,5,6-Tetrafluoro-7,7,8,8-tetracyanoquinodimethane; Titanium oxide phthalocyanine; 4,4',4"-Tris(N,N-diphenyl-amino)triphenylamine; Copper(II) phthalocyanine; Poly{9,9-dimethyl-10-(9-(4-vinylbenzyl)-9H-carbazol-3-yl)-9,10-dihydroacridine}; Poly[(9,9-dioctylfluorenyl-2,7-diyl)-co-(4,4'-(N-(diphenylamine))-(2-cyanoisopropylphenyl))]; 2,2',7,7'-Tetrakis[N-naphthalenyl(phenyl)-amino]-9,9-spirobifluorene; Tris(phenylpyrazole)iridium; 9,10-Dihydro-9,9-dimethyl-10-(9-phenyl-9H-carbazol-3-yl)-acridine; N2,N2,N6,N6-Tetraphenylnaphthalene-2,6-diamine; N,N'-Di(naphthalen-2-yl)-N,N'-diphenylbenzene-1,4-diamine; 2,8-bis(4,6-diphenyl-1,3,5-triazin-2-yl)dibenzo-[b,d]furan; 4,6-Bis(3,5-di(pyridin-2-yl)phenyl)-2-methylpyrimidine; Poly[(9,9-bis(3'-(N,N-trimethylamino)propyl)-2,7-fluorene)-alt-1,4-phenylene]diiodide; phenanthroline; 8-Hydroxyquinoline sodium salt; 1,3,5-Tri(diphenylphosphoryl-phen-3-yl)benzene; 2,2'-(4,4'-(Phenylphosphoryl)bis(4,1-phenylene))bis(1-phenyl-1H-benzo[d]imidazole); 3,5-Di(pyren-1-yl)pyridine; ReO3; Rb2CO3; CsF; MoO3; or Cs2CO3.

12. An apparatus, comprising:
an optical modulator that comprises at least one optically active organic or organometallic layer and that, when a predetermined voltage is applied, varies in at least one of:
a refractive index;
an absorption; or
a polarization property.

13. The apparatus of claim 12, wherein, when the predetermined voltage is applied to the optical modulator, the optical modulator varies in birefringence.

14. The apparatus of claim 13, wherein, when the predetermined voltage is applied to the optical modulator, the optical modulator varies in birefringence by about 0.005 or more.

15. The apparatus of claim 12, wherein, when the predetermined voltage is applied to the optical modulator, the optical modulator varies in the refractive index by about 0.005 or more.

16. The apparatus of claim 12, wherein, when the predetermined voltage is applied to the optical modulator, the optical modulator varies in the absorption within a predetermined range of wavelength by a factor of about 2 or more.

17. A system comprising:
an optical modulator comprising:
a first layer comprising at least one of an organic layer or an organometallic layer; and
a second layer comprising at least one of an extrinsic semiconductor layer or an electrode layer; and
a voltage source that, when applied to the optical modulator, causes the optical modulator to vary in at least one of:
a refractive index;
an absorption; or
a polarization property.

18. The system of claim 17, further comprising a head-mounted display that comprises the optical modulator.

19. The system of claim 18, further comprising an artificial-reality system that comprises the head-mounted display.

20. The system of claim 17, wherein the optical modulator further comprises an interlayer comprising a first surface in contact with the first layer and a second surface in contact with the second layer, the interlayer comprising at least one of a charge injection layer or a charge transport layer.
